# EUROPÄISCHE PATENTANMELDUNG

(11) **EP 2 842 674 A1**
(43) Veröffentlichungstag der Anmeldung: **04.03.2015**
(21) Anmeldenummer: 13181657.1
(22) Anmeldetag: 26.08.2013
(51) Int. Cl.: B23D 51/16

(54) **Hubsägengetriebe**

(71) Anmelder: HILTI Aktiengesellschaft, 9494 Schaan (LI)
(72) Erfinder: Haas, Günter, 86916 Kaufering (DE)
(74) Vertreter: Hilti Aktiengesellschaft Corporate Intellectual Property

(57) **Zusammenfassung**

Säbelsäge (1) zum Bearbeiten eines Werkstücks, insbesondere eines mineralischen oder metallischen Werkstoffs, enthaltend einen Antrieb (20) und eine Hubstange (60) mit einem ersten Hubstangenende (63), einem zweiten Hubstangenende (68) und einem Antriebspunkt (69).

Des Weiteren sind ein erster Gelenkstab (40) mit einem Drehgelenkpunkt (42) und einem Verbindungspunkt (44) sowie ein zweiter Gelenkstab (50) mit einem ersten Drehgelenkpunkt (52) und einem zweiten Drehgelenkpunkt (54) vorgesehen, wobei der Drehgelenkpunkt (42) des ersten Gelenkstabs (40) mit dem Antriebspunkt (69) der Hubstange (60) drehbar verbindbar ist und der Verbindungspunkt (44) des ersten Gelenkstabs (40) mittels einer Verbindungseinrichtung (70) mit dem Antrieb (20) drehfest verbindbar ist und wobei der Antrieb (20) zumindest teilweise in einem Antriebsgehäuse positionierbar ist.

## Beschreibung

### EINLEITUNG

Die vorliegende Erfindung betrifft eine Säbelsäge zum Bearbeiten eines Werkstücks, insbesondere eines mineralischen oder metallischen Werkstoffs. Die Säbelsäge enthält einen Antrieb sowie eine Hubstange mit einem ersten Hubstangenende, einem zweiten Hubstangenende und einem Antriebspunkt.

Säbelsägen der vorstehend beschriebenen Art sind allgemein bekannt und finden vor allem bei Anlagenmechanikern für Sanitär-, Heizungs- und Klimatechnik, Zimmerleuten und Bautischlern Anwendung. Säbelsägen werden auch als Recipro-, Hub- oder Tigersäge bezeichnet. Häufigste Anwendungen für derartige Sägen sind die Demontage von alten Bauelementen und das Trennen von Rohren, Leitungen oder ähnlichem. Für das Trennen von Metallrohren gibt es spezielle Führungsvorrichtungen, die einen geraden Schnitt erleichtert. Je nach Auswahl und Beschaffenheit des Sägeblatts können verschiedene Werkstoffe bearbeitet werden. Zur Verfügung steht eine Sägeblattauswahl für Metalle, Holz, Kunststoff, Grünschnitt und diamantsegmentierte Sägeblätter, die selbst Keramik durchtrennen können. Darüber hinaus existieren auch spezielle Sägeblätter mit HM-bestückten Schneiden. Der Antrieb erfolgt oftmals durch einen Elektromotor, der über ein Getriebe einen Exzenter antreibt. Auf diesem Exzenter läuft eine Pleuelstange, die die Drehbewegung des Motors in einen geraden Schub für das Sägeblatt umwandelt. Eine derartige Säbelsäge und der entsprechende Antrieb sind beispielsweise in der DE-Offenlegungsschrift 10 2010 038 343 offenbart.

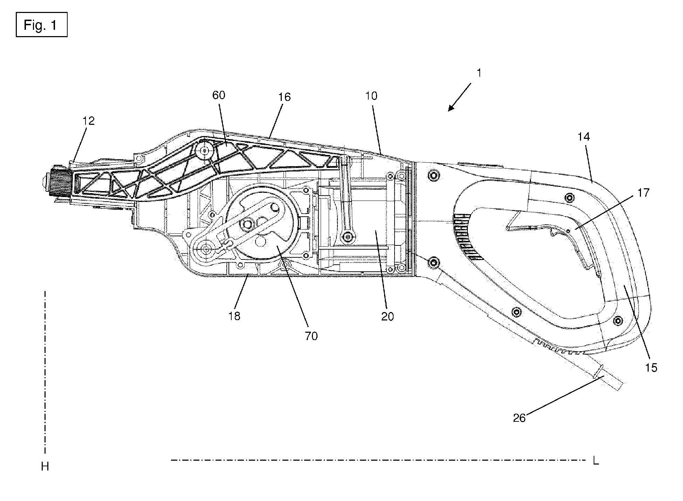

Darüber hinaus ist eine weitere bereits bekannte Ausführungsform einer Säbelsäge des Stands der Technik aus dem US-Patent 8.230,608 bekannt. Aus dem Offenbarungsgehalt dieser Druckschrift geht insbesondere eine Antriebsvorrichtung einer Säbelsäge hervor, bei der die Antriebswelle eines Elektromotors ein Ritzel enthält. Das Ritzel ist wiederum mit einem Zahnrad verbunden und von diesem angetrieben. Das Zahnrad treibt abermals eine Getriebewelle an, auf der sich eine Taumelscheibenvorrichtung befindet. Die Taumelscheibenvorrichtung ist so auf der Getriebewelle angebracht, dass diese entsprechend der Drehposition der Getriebewelle vor und zurück (d.h. zwischen einer rechten und linken Endposition gemäß Fig. 1, 2, 3 d. US-Patent 8.230,608) bewegt werden kann. Mittels eines Schwenkanschlusses wird die Vor- und Rückbewegung der Taumelscheibenvorrichtung auf einen Kolben übertragen, wodurch dieser Kolben ebenfalls vor- und zurückbewegt wird. Durch die Vor- und Rückbewegung des Kolbens wird schließlich auch damit das Sägeblatt, welche sich an dem vorderen Ende des Kolbens befindet, vor- und zurückbewegt.

Nachteilig an diesen Säbelsägen des Stands der Technik und insbesondere an deren Antrieben ist die aufwendige sowie kostenintensive Konstruktion. Darüber hinaus bieten derartige Säbelsägen keinen ausreichenden Schutz gegen eindringenden Staub, welcher speziell bei der Bearbeitung von mineralischen Werkstoffen entsteht. Dieser Staub dringt durch verschiedene Öffnungen des Gehäuses in das Innere der Säbelsäge ein und setzt sich an Gleitlagern und anderen kritischen Komponenten (wie z.B. der Taumelscheibenvorrichtung) ab. Durch die Staubablagerungen werden schließlich die Funktionen der Lager, Dichtungen und anderer kritischer Bauteile teilweise soweit negativ beeinflusst, dass es zu Leistungsreduktionen oder sogar Komplettausfällen der Säbelsägen kommen kann.

Es ist daher Aufgabe der vorliegenden Erfindung eine verbesserte Säbelsäge bereitzustellen, durch welche die oben genannten Probleme und insbesondere die negative Beeinträchtigung von Staubablagerungen beseitigt werden.

Die vorstehend genannte Aufgabe wird durch den erfindungsgemässen Gegenstand des unabhängigen Anspruchs 1 gelöst. Weitere vorteilhafte Ausgestaltungen der vorliegenden Erfindung sind in den abhängigen Ansprüchen beschrieben.

Demnach wird eine Säbelsäge zum Bearbeiten eines Werkstücks, insbesondere eines mineralischen oder metallischen Werkstoffs, bereitgestellt. Die Säbelsäge enthält einen Antrieb und eine Hubstange mit einem ersten Hubstangenende, einem zweiten Hubstangenende und einem Antriebspunkt.

Erfindungsgemäss sind ein erster Gelenkstab mit einem Drehgelenkpunkt und einem Verbindungspunkt sowie ein zweiter Gelenkstab mit einem ersten Drehgelenkpunkt und einem zweiten Drehgelenkpunkt vorgesehen, wobei der Drehgelenkpunkt des ersten Gelenkstabs mit dem Antriebspunkt der Hubstange drehbar verbindbar ist und der Verbindungspunkt des ersten Gelenkstabs mittels einer Verbindungseinrichtung mit dem Antrieb drehfest verbindbar ist und wobei der Antrieb zumindest teilweise in einem Antriebsgehäuse positionierbar ist.

Gemäss einer weiteren vorteilhaften Ausgestaltungsform kann die Verbindungseinrichtung einen ersten Pleuelstab mit einem ersten Pleuelstabende und einem zweiten Pleuelstabende sowie einen Hebelarm mit einem ersten Hebelarmende und einem zweiten Hebelarmende enthalten, wobei das zweite Pleuelstabende mit dem ersten Hebelarmende drehbar verbindbar ist, wodurch eine effiziente und besonders platzsparende Übertragungsmöglichkeit für das im Antrieb erzeugte Drehmoment gegeben ist.

Entsprechend einer weiteren vorteilhaften Ausgestaltungsform der vorliegenden Erfindung kann die Verbindungseinrichtung in Form einer Kulissenführung verwirklicht sein, über welche ein in dem Antrieb erzeugtes Drehmoment wenigstens auf den Verbindungspunkt des ersten Gelenkstabs übertragbar ist. Durch die Kulissenführung ist eine weitere effiziente und besonders platzsparende Übertragungsmöglichkeit für das im Antrieb erzeugte Drehmoment gegeben.

Gemäss einer weiteren vorteilhaften Ausgestaltungsform der vorliegenden Erfindung kann vorgesehen sein, dass der Abstand entlang einer Längsachse zwischen dem ersten Drehgelenkpunkt des ersten Gelenkstabs und dem zweiten Drehgelenkpunkt des zweiten Gelenkstabs variabel einstellbar ist. Hierdurch entsteht eine erste Verstellmöglichkeit, um die Pendelhubbewegung der Hubstange und damit auch des Sägeblatts, welche durch den Antrieb mittels der Kulissenführung entsteht, beeinflussen zu können.

Darüber hinaus ist es möglich, dass der Abstand entlang der Längsachse zwischen dem Antriebspunkt der Hubstange und dem ersten Drehgelenkpunkt des zweiten Gelenkstabs variabel einstellbar ist. Hierdurch entsteht eine weitere Verstellmöglichkeit, um die Pendelhubbewegung der Hubstange und damit auch des Sägeblatts, welche durch den Antrieb mittels der Kulissenführung entsteht, beeinflussen zu können.

Um eine weitere Verstellmöglichkeit zur Beeinflussung der Pendelhubbewegung der Hubstange und damit auch des Sägemittels schaffen zu können, kann der Abstand entlang einer Hochachse zwischen dem ersten Drehgelenkpunkt des ersten Gelenkstabs und dem zweiten Drehgelenkpunkt des zweiten Gelenkstabs variabel einstellbar sein.

Entsprechend einer weiteren vorteilhaften Ausgestaltungsform der vorliegenden Erfindung kann ein Kulissenhebel der Kulissenführung wenigstens einseitig federnd gelagert ist. Hierdurch können die immer wieder auftretenden Stösse, welche während der Vorwärtsbewegung des Hubstange und des Sägemittels auftreten, abgemindert werden und die Verzahnung an dem Sägemittel kostengünstiger ausgeführt werden, da anstelle eines Fräsens ein Sintern der Zähne möglich wird.

Die vorliegende Erfindung wird bezüglich vorteilhafter Ausführungsbeispiele näher erläutert, hierbei zeigt
- Fig.1: eine Seitenansicht der erfindungsgemässen Säbelsäge gemäss einer ersten Ausführungsform mit einem teilweise entfernten Gehäuse;
- Fig. 2: eine erste perspektivische Ansicht des Antriebs gemäss der ersten Ausführungsform zusammen mit der Kulissenführung samt Kulissenhebel;
- Fig. 3: eine zweite perspektivische Ansicht des Antriebs gemäss der ersten Ausführungsform ohne Kulissenhebel;
- Fig. 4: eine dritte perspektivische Ansicht des Antriebs gemäss der ersten Ausführungsform zusammen mit der Kulissenführung samt Kulissenhebel;
- Fig. 5: eine vierte perspektivische Ansicht des Antriebs gemäss der ersten Ausführungsform zusammen mit der Kulissenführung samt Kulissenhebel;
- Fig. 6: eine fünfte perspektivische Ansicht des Antriebs gemäss der ersten Ausführungsform zusammen mit der Kulissenführung samt Kulissenhebel;
- Fig. 7: eine sechste perspektivische Ansicht des Antriebs gemäss der ersten Ausführungsform zusammen mit der Gegengewichtsvorrichtung entsprechend einer ersten Ausgestaltungsform;
- Fig. 8: eine siebte perspektivische Ansicht des Antriebs gemäss der ersten Ausführungsform zusammen mit der Gegengewichtsvorrichtung entsprechend der ersten Ausgestaltungsform;
- Fig. 9: eine achte perspektivische Ansicht des Antriebs gemäss der ersten Ausführungsform zusammen mit der Gegengewichtsvorrichtung entsprechend der ersten Ausgestaltungsform;
- Fig. 10: eine neunte perspektivische Ansicht des Antriebs gemäss der ersten Ausführungsform zusammen mit der Gegengewichtsvorrichtung entsprechend der ersten Ausgestaltungsform,
- Fig.11: eine Seitenansicht der erfindungsgemässen Säbelsäge gemäss der zweiten Ausführungsform mit einem teilweise entfernten Gehäuse;
- Fig. 12: eine zehnte perspektivische Ansicht des Antriebs gemäss der zweiten Ausführungsform zusammen mit dem ersten Pleuelstab und der Gegengewichtsvorrichtung entsprechend einer zweiten Ausgestaltungsform;
- Fig. 13: eine elfte perspektivische Ansicht des Antriebs gemäss der zweiten Ausführungsform zusammen mit dem ersten Pleuelstab und der Gegengewichtsvorrichtung entsprechend der zweiten Ausgestaltungsform;
- Fig.14: eine zwölfte perspektivische Ansicht des Antriebs gemäss der zweiten Ausführungsform zusammen mit dem ersten Pleuelstab und der Gegengewichtsvorrichtung entsprechend der zweiten Ausgestaltungsform;
- Fig. 15: eine dreizehnte perspektivische Ansicht des Antriebs gemäss der zweiten Ausführungsform zusammen mit dem ersten Pleuelstab und der Gegengewichtsvorrichtung entsprechend der zweiten Ausgestaltungsform;
- Fig. 16: eine vierzehnte perspektivische Ansicht des Antriebs gemäss der zweiten Ausführungsform zusammen mit dem ersten Pleuelstab und der Gegengewichtsvorrichtung entsprechend der zweiten Ausgestaltungsform;
- Fig. 17: eine fünfzehnte perspektivische Ansicht des Antriebs gemäss der zweiten Ausführungsform zusammen mit dem ersten Pleuelstab und der Gegengewichtsvorrichtung entsprechend der zweiten Ausgestaltungsform ohne ein erstes Gegengewichtselement;
- Fig.18: eine sechzehnte perspektivische Ansicht des Antriebs gemäss der zweiten Ausführungsform zusammen mit einem zweiten Pleuelstab und der Gegengewichtsvorrichtung entsprechend der zweiten Ausgestaltungsform;
- Fig. 19: eine siebzehnte perspektivische Ansicht des Antriebs gemäss der zweiten Ausführungsform zusammen mit dem zweiten Pleuelstab und der Gegengewichtsvorrichtung entsprechend der zweiten Ausgestaltungsform;
- Fig. 20: eine achtzehnte perspektivische Ansicht des Antriebs gemäss der zweiten Ausführungsform zusammen mit dem zweiten Pleuelstab und der Gegengewichtsvorrichtung entsprechend der zweiten Ausgestaltungsform; und
- Fig. 21: eine neunzehnte perspektivische Ansicht des Antriebs gemäss der zweiten Ausführungsform zusammen mit dem zweiten Pleuelstab und der Gegengewichtsvorrichtung entsprechend der zweiten Ausgestaltungsform.

### AUSFÜHRUNGSBEISPIELE

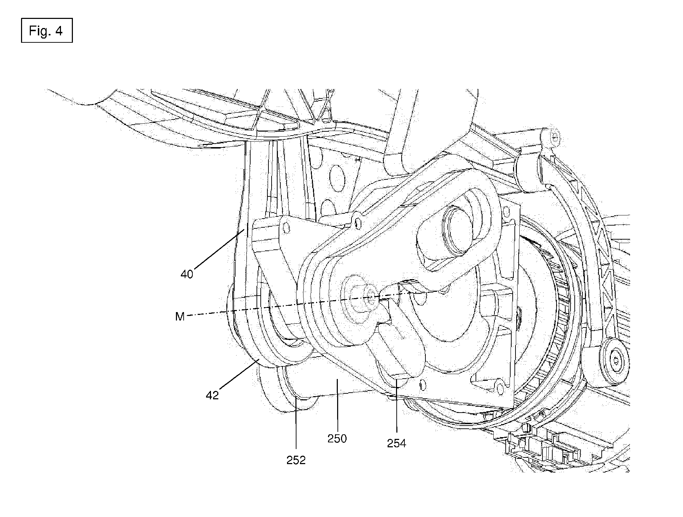

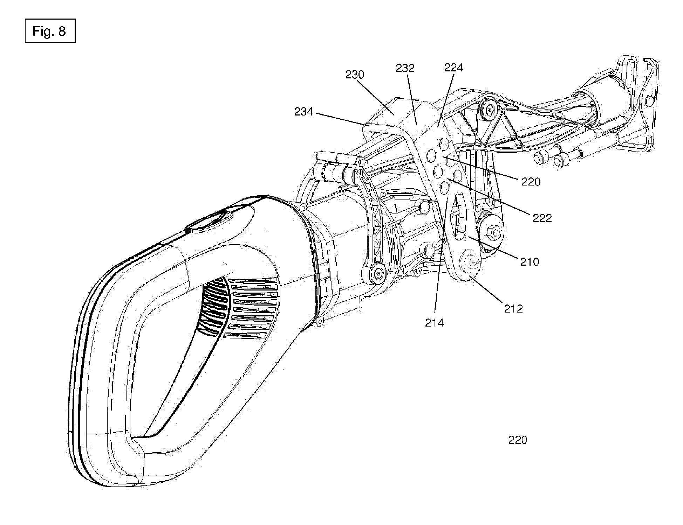

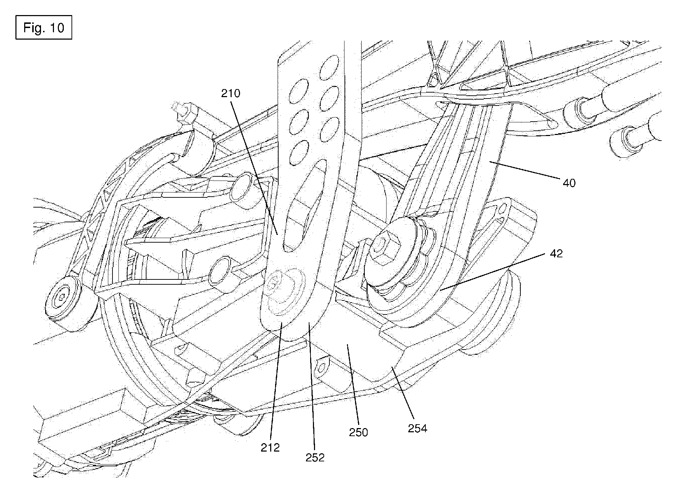

Fig. 1 bis 10 zeigen eine erste Ausführungsform der erfindungsgemässen Säbelsäge 1, welche im Wesentlichen ein Säbelsägengehäuse 10, einen Antrieb 20, einen ersten Gelenkstab 40, einen zweiten Gelenkstab 50, eine Hubstange 60, eine Verbindungseinrichtung 70, ein nicht gezeigtes Sägemittel und eine nicht gezeigte Steuerungsvorrichtung enthält.

Das Säbelsägengehäuse 10 weist ein erstes Gehäuseende 12, ein zweites Gehäuseende 14, eine Gehäuseoberseite 16 und eine Gehäuseunterseite 18 auf. An dem ersten Gehäuseende 12 ist das Sägemittel positioniert und an dem zweiten Gehäuseende 14 befindet sich ein Handgriff 15 mit einem Schalterelement 17. Der Antrieb 20, der erste Gelenkstab 40, der zweite Gelenkstab 50, die Hubstange 60 sowie die Steuerungsvorrichtung sind wenigstens teilweise in dem Säbelsägengehäuse 10 untergebracht.

Der Antrieb 20 enthält ein Antriebsgehäuse 22, einen Motor 23 mit einer Antriebswelle 24 und einem Antriebsrad 25 sowie eine Energieversorgung 26. Bei dem Motor 23 kann es sich um eine Gleichstrom- oder auch um einen Wechselstrommotor handeln. Darüber hinaus ist es auch möglich, dass jeder andere geeignete Motor 23 verwendet werden kann. Bei der Energieversorgung 26 handelt es sich um ein Stromzuführungskabel, welches an dem zweiten Gehäuseende 14 angeordnet ist. Alternativ kann die Energievorrichtung 26 auch durch einen Akkumulator oder ähnliches verwirklicht sein.

Der Motor 23 mit der Antriebswelle 24, dem Antriebsrad 25 sowie der Verbindungseinrichtung 70 sind in dem Antriebsgehäuse 22 positioniert und durch dieses nahezu vollständig isoliert. Die Isolierung dient hauptsächlich dazu den Motor 23 und dessen Bestandteile vor Staub, Schmutz und anderen Verunreinigungen zu schützen.

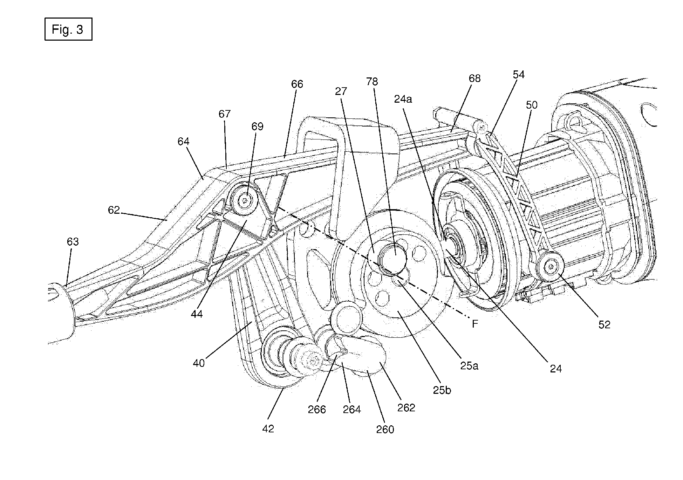

Wie insbesondere in Fig. 3 gezeigt sowie später noch weiter erläutert, erstreckt sich die Antriebswelle 24 entlang einer Längsachse L aus dem Motor 23. Die Antriebswelle 24 enthält ein erstes Ende 24a und ein nicht gezeigtes zweites Ende. Das Antriebsrad 25 enthält eine zentrale Aufnahmeöffnung 25a, eine erste Oberfläche 25b sowie eine (nicht dargestellte) zweite Oberfläche. Mit der zentralen Aufnahmeöffnung 25a ist das Antriebsrad 25 drehfest mit dem zweiten Ende der Antriebswelle 24 verbunden, wodurch ein im Motor 23 erzeugtes Drehmoment auf das Antriebsrad 25 übertragen wird. Auf der ersten Oberfläche 25b ist ein unzentrierter bzw. aussermittiger Kurbelzapfen 27 angebracht. Die erste Oberfläche 25b erstreckt sich ausserdem entlang einer vertikalen Ebene.

Die Verbindungseinrichtung 70 ist gemäss der ersten Ausführungsform der erfindungsgemässen Säbelsäge 1 in Form einer Kulissenführung 71 ausgestaltet. Die als Kulissenführung 71 ausgeführte Verbindungseinrichtung 70 enthält einen Kulissenhebel 72 und einen Kulissenstein 78. Der Kulissenhebel 72 enthält ein erstes Kulissenhebelende 73, ein zweites Kulissenhebelende 74 sowie eine Kulissenschlitz 76. Die Kulissenführung 71 ist dabei im Wesentlichen vollständig und gegen mögliche Staubablagerungen geschützt in dem Antriebsgehäuse 22 isoliert untergebracht. Der Kulissenstein 78 ist an dem Kurbelzapfen 27 des Antriebsrads 25 drehbar befestig und so in dem Kulissenschlitz 76 eingefasst und geführt, dass sich das Kulissenstein 78 zur Drehmomentübertragung innerhalb des Kulissenschlitzes 76 reversibel entlang den Pfeilrichtungen A und B vor- und zurückbewegen kann.

Die Hubstange 60 enthält einen ersten Hubstangenanteil 62 und einen zweiten Hubstangenanteil 66. Der erste Hubstangenanteil 62 weist ein erstes Ende 63 sowie ein zweites Ende 64 auf und der zweite Hubstangenanteil 66 weist ebenfalls ein erstes Ende 67 sowie ein zweites Ende 68 auf. Der erste Hubstangenanteil 62 ist mit dem zweiten Ende 64 in einem Winkel W mit dem ersten Ende 67 des zweiten Hubstangenanteils 66 verbunden. Dieser Winkel W erstreckt sich dabei in der vertikalen Ebene, so dass das erste Ende 63 des ersten Hubstangenanteils 62 zur Gehäuseunterseite 18 geneigt ist. Die Hubstange 60 weist hierdurch eine leicht gekrümmte Form auf. Des Weiteren weist die Hubstange 60 einen Antriebspunkt 69 auf, der sich im Wesentlichen in der Nähe des ersten Endes 67 des zweiten Hubstangenanteils 66 befindet.

Der erste Gelenkstab 40 enthält einen Drehgelenkpunkt 42 und einen Verbindungspunkt 44. Der Verbindungspunkt 44 des ersten Gelenkstabs 40 ist mit dem ersten Kulissenhebelende 73 fest verbunden. Der erste Gelenkstab 40 und der Kulissenhebel 72 stehen in einem spitzen Winkel zueinander. Alternativ ist jedoch auch jeder andere Winkel möglich. Der Drehgelenkpunkt 42 des ersten Gelenkstabs 40 ist wiederum mit dem Antriebspunkt 69 der Hubstange 60 drehbar verbunden. Der Drehgelenkpunkt 42 dient dazu die Hubstange 60 zu bewegen.

Der zweite Gelenkstab 50 enthält einen ersten Drehgelenkpunkt 52 und einen zweiten Drehgelenkpunkt 54. Der erste Drehgelenkpunkt 52 des zweiten Gelenkstabs 50 ist mit dem Antriebsgehäuse 22 drehbar verbunden. Das zweite Gelenkstabende 54 des zweiten Gelenkstabs 50 ist mit dem zweiten Ende 68 des zweiten Hubstangenanteils 66 drehbar verbunden. Der zweite Gelenkstab 50 dient zur Führung und Stabilisierung der Hubstange 60.

Das nicht gezeigte Sägemittel ist in Form eines Sägeblattes mit einer Vielzahl an Sägezähnen verwirklicht und enthält ein erstes Sägemittelende und ein zweites Sägemittelende. Das erste Sägemittelende ist lösbar mit dem ersten Ende 63 des ersten Hubstangenanteils 62 verbunden. Das als Sägeblatt ausgeführte Sägemittel dient zum Durchtrennen, Schneiden und Sägen zahlreicher mineralischer oder metallischer Werkstoffe. Je nach Beschaffenheit und Eigenschaften des Sägeblattes kann aber auch Holz, Kunststoff oder ähnliches bearbeitet, d.h. durchtrennt, geschnitten und/oder gesägt werden.

Die nicht dargestellte Steuerungsvorrichtung dient zur Steuerung und Regelung des Sägevorgangs, der Energieversorgung 26 sowie zahlreicher anderer Aufgaben und Funktionen.

Durch den Motor 23 wird das Antriebsrad 25 um die Rotationsachse F in Rotation versetzt, wodurch (wie bereits vorstehend beschrieben) der Kulissenstein 78 in dem Kulissenschlitz 76 reversibel entlang den Pfeilrichtungen A und B vor- und zurückbewegt wird und folglich der Kulissenhebel 72 um eine Schwenkachse P an dem ersten Kulissenhebelende 73 reversibel entlang den Pfeilrichtungen C und D geschwenkt wird. Hierdurch wird das von dem Antrieb 20 und insbesondere das von dem Motor 23 erzeugte Drehmoment an den Kulissenhebel 72 der Kulissenführung 71 weitergegeben. Über den ersten Gelenkstab 40, welcher mit dem Verbindungspunkt 44 an dem ersten Kulissenhebelende 73 drehfest befestigt ist, wird der erste Gelenkstab 40 in eine reversible Pendelbewegung um einen Schwenkpunkt an dem ersten Kulissenhebelende 73 versetzt. Hierdurch wird die Kraft des Antriebs 20 über die Kulissenführung 71, den ersten Gelenkstab 40 und den Antriebspunkt 69 schliesslich an die Hubstange 60 weitergegeben. Als Folge daraus wird die Hubstange 60 reversibel in eine Vor- und Rückbewegung entlang den Pfeilrichtungen E und F versetzt. Die Vorbewegung verläuft hierbei in Pfeilrichtungen E, d.h. in Richtung des ersten Gehäuseendes 12. Die Rückbewegung verläuft wiederum in Pfeilrichtungen F, d.h. in Richtung des zweiten Gehäuseendes 14. Die Vor- und Rückbewegung der angetriebenen Hubstange 60 beschreiben dabei eine leichte Bogenbewegung. Über einen Verbindungspunkt an dem ersten Ende 63 des ersten Hubstangenanteils 62 zu dem ersten Sägemittelende werden die Vor- und Rückbewegung sowie die Kraft der Hubstange 60 an das Sägemittel weitergegeben. Hierdurch wird das Sägemittel ebenfalls in eine Vor- und Rückbewegung entlang den Pfeilrichtungen E und F versetzt, wodurch die Bearbeitung eines Werkstoffes vorgenommen werden kann. Wie bereits vorstehend erwähnt, beschreibt die Hubstange 60 einen leichten Bogen bei ihrer Bewegung, wobei diese spezielle Bewegung der Hubstange 60 derartig an das Sägemittel weitergegeben wird, dass auch das Sägemittel bei der Bewegung einen leichten Bogen beschreibt und hierdurch eine Pendelhubbewegung erzeugt. Diese Pendelhubbewegung des Sägemittels kann insbesondere zur Beschleunigung und Effizienzsteigerung des Sägevorgangs der Säbelsäge 1 genutzt werden.

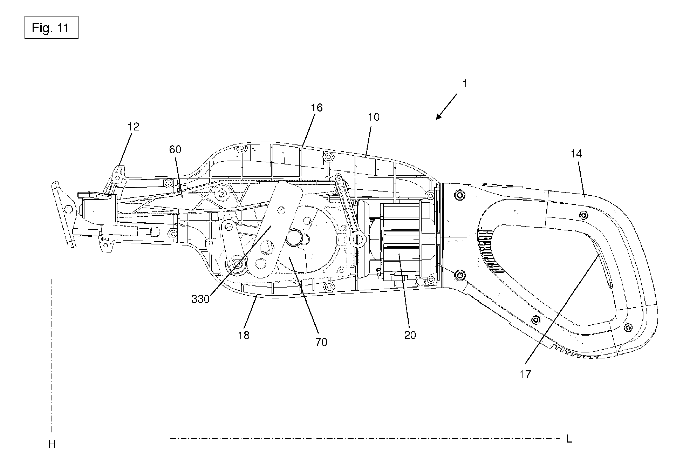

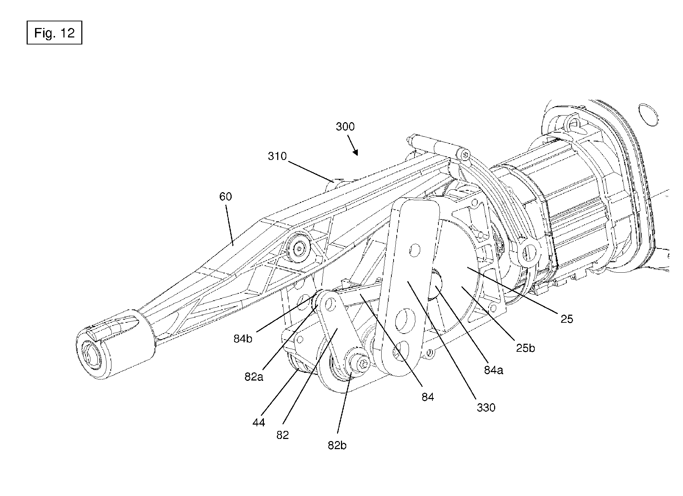

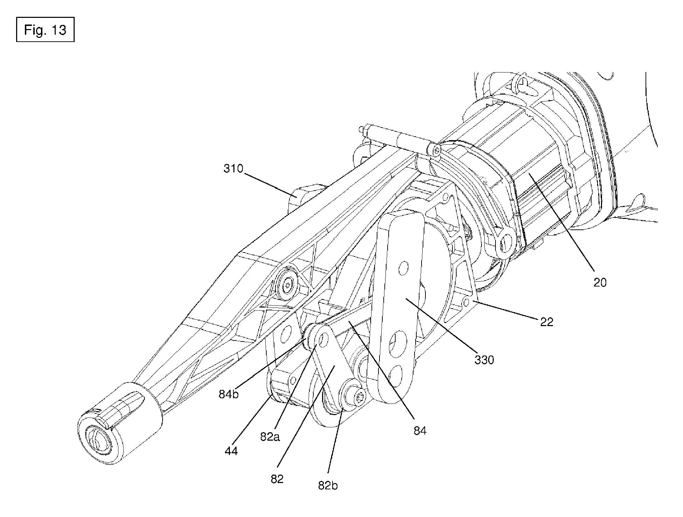

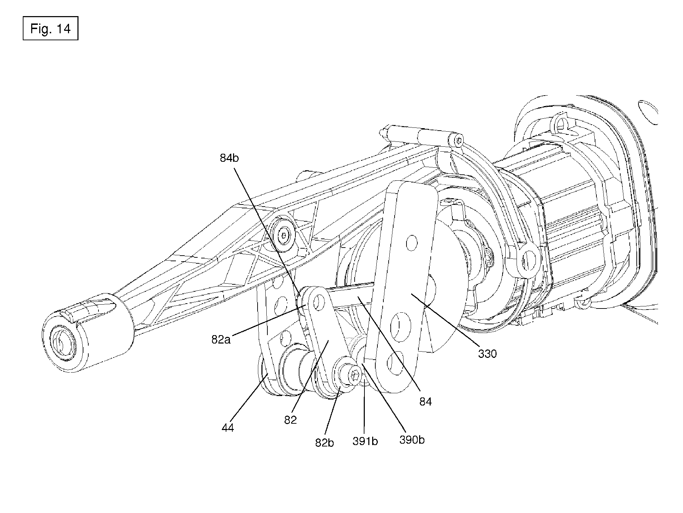

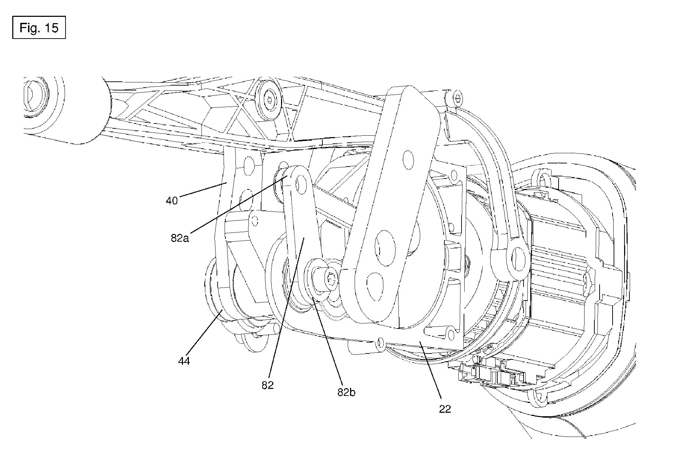

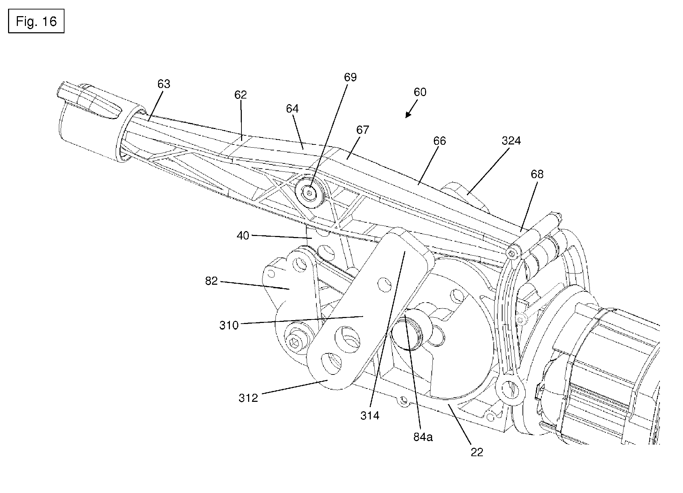

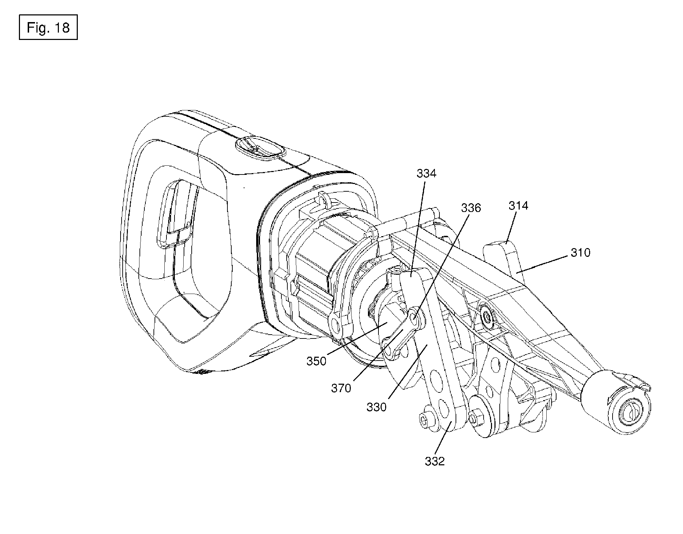

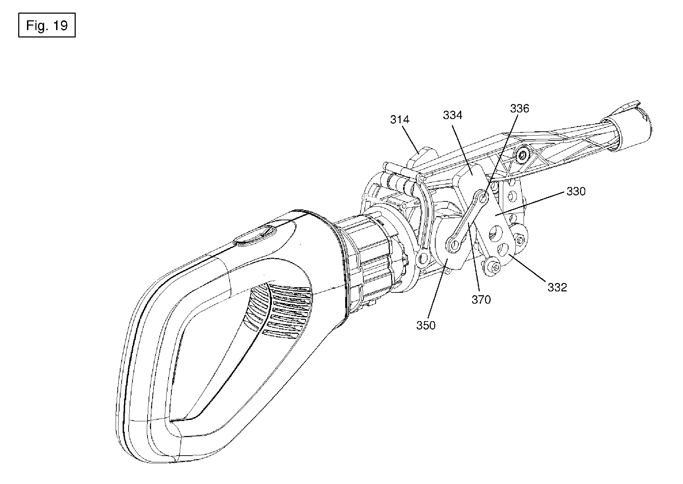

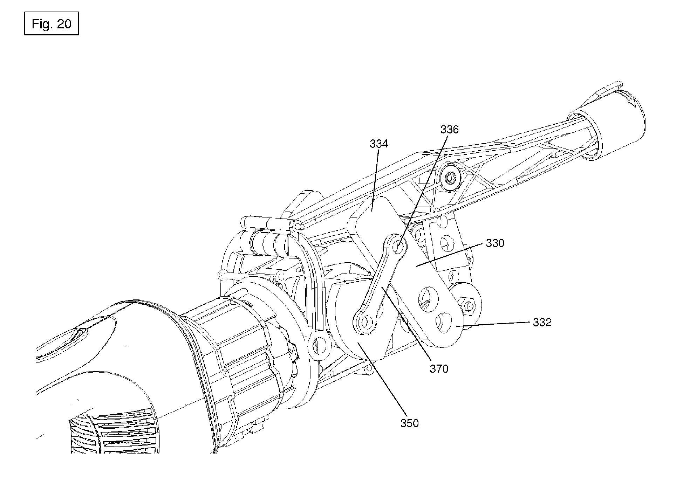

Fig. 11 bis 21 zeigen eine zweite Ausführungsform der erfindungsgemässen Säbelsäge 1, welche im Wesentlichen ebenfalls ein Säbelsägengehäuse 10, einen Antrieb 20, einen ersten Gelenkstab 40, einen zweiten Gelenkstab 50, eine Hubstange 60, eine Verbindungseinrichtung 70, ein nicht gezeigtes Sägemittel und eine nicht gezeigte Steuerungsvorrichtung enthält. Die zweite Ausführungsform der Säbelsäge 1 entspricht dabei im Wesentlichen der ersten Ausführung der Säbelsäge 1. Im Gegensatz zur Säbelsäge 1 der ersten Ausführungsform enthält die Säbelsäge 1 der zweiten Ausführungsform keine Verbindungseinrichtung 70 in Form einer Kulissenführung 71.

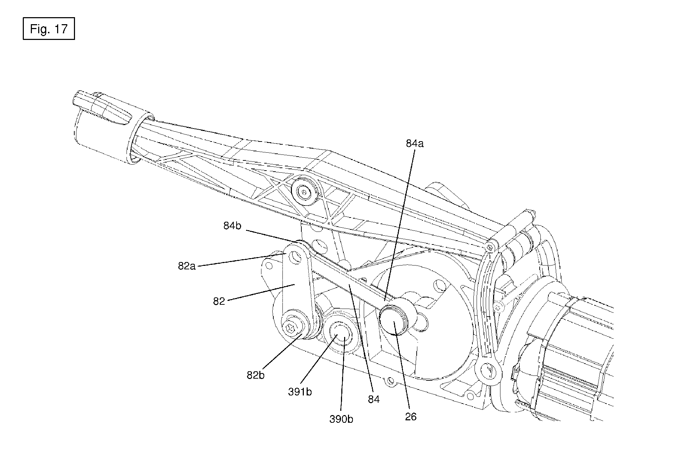

Wie besonders deutlich in Fig. 17 gezeigt, enthält die Verbindungsvorrichtung 70 gemäss der zweiten Ausführungsform einen Hebelarm 82 sowie einen ersten Pleuelstab 84. Der Hebelarm 82 enthält ein erstes Hebelarmende 82a und ein zweites Hebelarmende 82b. Der erste Pleuelstab 84 enthält ein erstes Pleuelstabende 84a sowie ein zweites Pleuelstabende 84b. Wie bereits vorstehend beschrieben enthält der Antrieb 20 ein Antriebsrad 25. Das Antriebsrad 25 enthält wiederum eine erste Oberfläche 25b sowie eine nicht gezeigte zweite Oberfläche. Auf der ersten Oberfläche 25b ist ein unzentrierter bzw. aussermittiger Kurbelzapfen 27 angebracht. Die erste Oberfläche 25b erstreckt sich ausserdem entlang einer vertikalen Ebene entlang einer Längsachse L.

Das erste Pleuelstabende 84a des ersten Pleuelstabs 84 ist drehbar mit dem Kurbelzapfen 27 drehbar verbunden. Das zweite Pleuelstabende 84b des ersten Pleuelstabs 84 ist drehbar mit dem ersten Hebelarmende 82a verbunden. Das zweite Hebelarmende 82b ist mit dem Verbindungspunkt 44 des ersten Gelenkstabs 40 drehfest verbunden. Über den Kurbelzapfen 27 wird ein im Antrieb 20 erzeugtes Drehmoment auf den ersten Pleuelstab 84 und dann auf den Hebelarm 82 übertragen, welches anschliessend auf den ersten Gelenkstab 40 und damit schliesslich auf die Hubstange 60 weitergeleitet wird.

Gemäß einer dritten Ausführungsform der erfindungsgemässen Säbelsäge 1 kann außerdem eine Gegengewichtsvorrichtung 200 entsprechend einer ersten Ausgestaltungsform vorgesehen sein. Die Gegengewichtsvorrichtung 200 dient dazu Vibrationen und Schwingungen, die während des Betreibens der Säbelsäge 1 und insbesondere durch den Antrieb 20 erzeugt werden, auszugleichen und zu minimieren.

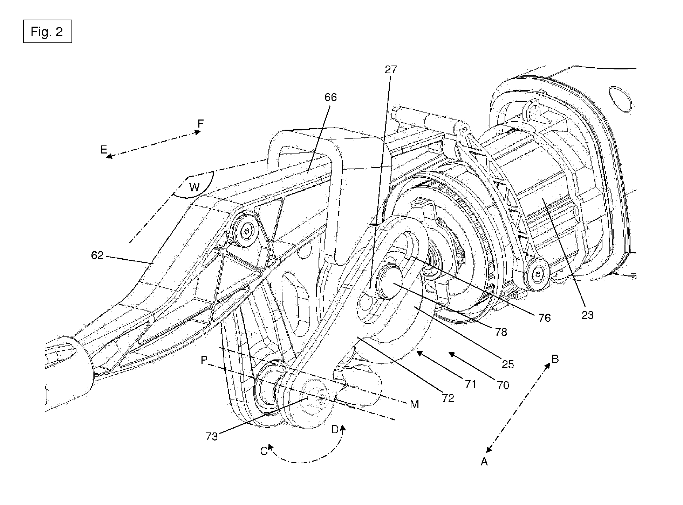

Wie in Figur 2 bis 10 dargestellt, enthält die Gegengewichtsvorrichtung 200 einen ersten Gewichtsabschnitt 210 mit einem ersten Ende 212 und einem zweiten Ende 214, einen zweiten Gewichtsabschnitt 220 mit einem ersten Ende 222 und einem zweiten Ende 224, einen drittem Gewichtsabschnitt 230 mit einem ersten Ende 232 und einem zweiten Ende 234 sowie einen vierten Gewichtsabschnitt 240 mit einem ersten Ende 242 und einem zweiten Ende 244. Darüber hinaus enthält die Gegengewichtsvorrichtung 200 eine Achse 250 und ein Hebelelement 260. Die Achse 250 erstreckt sich in entlang der Achse M und enthält ein erstes Achsenende 252 sowie ein zweites Achsenende 254. Das Hebelelement 260 enthält ein erstes Hebelelementende 262 und ein zweites Hebelelementende 264. Das erste Hebelelementende 262 weist eine Verbindungsstelle 265 auf und das zweite Hebelelementende 264 enthält eine Nut 266. Über die Verbindungsstelle 265 ist das zweite Hebelelementende 264 mit dem zweiten Achsenende 254 drehfest verbunden. Das zweite Ende 214 des ersten Gewichtsabschnitts 210 ist mit dem ersten Ende 222 des zweiten Gewichtsabschnitts 220 verbunden. Das zweite Ende 224 des zweiten Gewichtsabschnitts 220 ist wiederum mit dem ersten Ende 232 des dritten Gewichtsabschnitts 230 verbunden. Des Weiteren ist das zweite Ende 234 des dritten Gewichtsabschnitts 230 mit dem ersten Ende 242 des vierten Gewichtsabschnitts 240 verbunden.

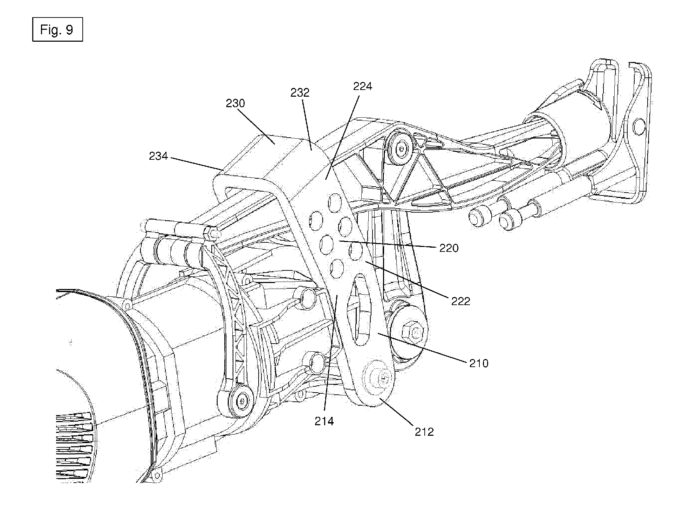

Wie in Fig. 9 gezeigt, sind der erste Gewichtsabschnitt 210 und der zweite Gewichtsabschnitt 220 in einem Winkel zueinander positioniert, dass der zweite Gewichtsabschnitt 220 leicht in Richtung des zweiten Gehäuseendes 14 gebogen ist.

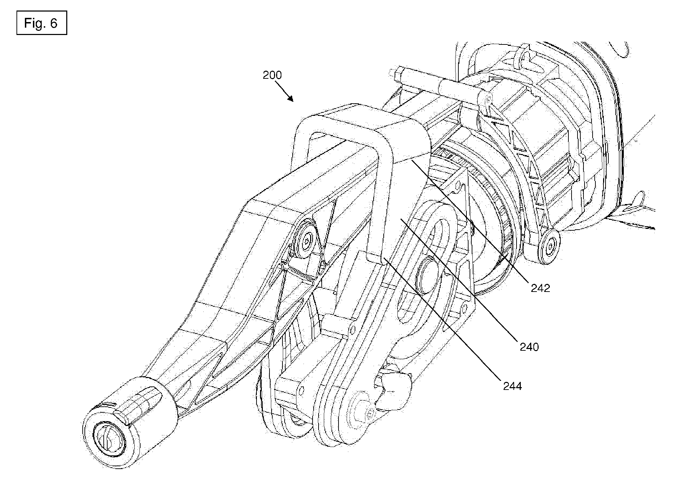

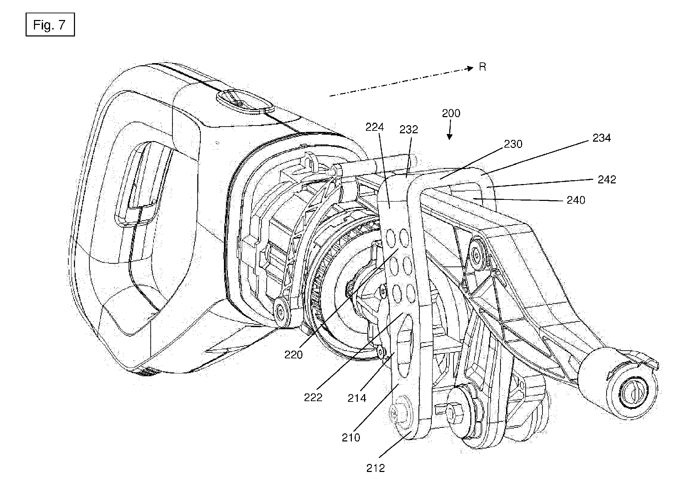

Wie in Fig. 6 und 7 dargestellt, sind der zweite Gewichtsabschnitt 220 und der dritte Gewichtsabschnitt 230 ebenfalls in einem Winkel zueinander angeordnet. Der dritte Gewichtsabschnitt 230 erstreckt sich somit im Wesentlichen in einem rechten Winkel zu dem zweiten Gewichtsabschnitt 220 entlang der Richtung R und über die Hubstange 60.

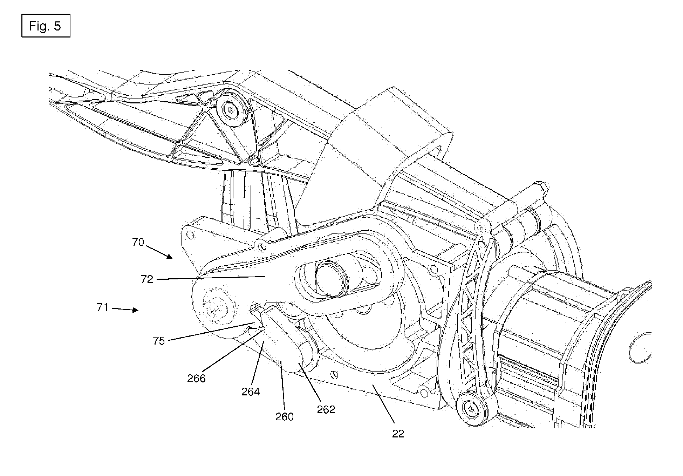

Wie in Fig. 5, 6, 7 gezeigt, ist der dritte Gewichtsabschnitt 230 und der vierte Gewichtsabschnitt 240 auch in einem Winkel zueinander positioniert. Der vierte Gewichtsabschnitt 240 erstreckt sich somit im Wesentlichen in einem rechten Winkel zu dem dritten Gewichtsabschnitt 230 in Richtung der Gehäuseunterseite 18, so dass der vierte Gewichtsabschnitt 240 parallel zu dem zweiten Gewichtsabschnitt 220 verläuft.

Die Gegengewichtsvorrichtung 200 weist somit im Wesentlichen die Form eines Haken bzw. Bügels auf, der sich um die Hubstange 60 erstreckt.

Darüber hinaus weist der Kulissenhebel 72 gemäss der weiteren Ausführungsform der erfindungsgemässen Säbelsäge 1 an dem ersten Kulissenhebelende 73 ein Zahnelement 75 in Form einer spitzzulaufenden Erhebung auf. Wie insbesondere in Fig. 2 gezeigt, erstreckt sich das Zahnelement 75 im Wesentlichen in Richtung des zweiten Gehäuseendes 14 und liegt dabei in derselben Ebene, in der auch der Kulissenhebel 72 liegt. Die spitzzulaufende Erhebung des Zahnelements 75 ist so ausgestaltet, dass diese von der Nut 266 des zweiten Hebelelementendes 264 aufgenommen und dadurch das Hebelelement 260 von dem Kulissenhebel 72 bewegt werden kann.

Um, wie bereits vorstehend beschrieben, die während des Betreibens der Säbelsäge 1 und insbesondere durch den Antrieb 20 erzeugten Vibrationen und Schwingungen auszugleichen, wird die durch den Antrieb 20 erzeugte Bewegung des Kulissenhebels 72 über das Zahnelement 75 auf das Hebelelement 260, die Achse 250 und schliesslich auf die Gegengewichtsvorrichtung 200 übertragen. Aufgrund der speziellen Winkelstellungen des Zahnelements 75, des Kulissenhebels 72, des Hebelelements 260, der Gegengewichtsvorrichtung 200 sowie des ersten Gelenkstabs 40 zueinander, bewegt sich die Gegengewichtsvorrichtung 200 im Wesentlichen entgegen der Bewegung des ersten Gelenkstabs 40 und der Hubstange 60. Hierdurch wird den erzeugten Vibrationen und Schwingungen entgegengewirkt und folglich ein ruhigeres und effizienteres Arbeiten mit der Säbelsäge 1 erreicht.

Gemäß einer vierten Ausführungsform der erfindungsgemässen Säbelsäge 1 kann außerdem eine Gegengewichtsvorrichtung 300 entsprechend einer zweiten Ausgestaltungsform vorgesehen sein. Diese Gegengewichtsvorrichtung 300 dient ebenfalls dazu Vibrationen und Schwingungen, die während des Betreibens der Säbelsäge 1 und insbesondere durch den Antrieb 20 erzeugt werden, auszugleichen und zu minimieren.

Wie in Figur 11 bis 16 und 18 bis 21 dargestellt, enthält die Gegengewichtsvorrichtung 300 entsprechend der zweiten Ausgestaltungsform ein erstes Gegengewichtselement 310, ein zweites Gegengewichtselement 330, ein Ausgleichsgewichtselement 350, einen zweiten Pleuelstab 370 und einen zylinderförmigen Verbindungsschaft 390. Der zylinderförmige Verbindungsschaft 390 enthält ein erstes Ende 390a und ein zweites Ende 390b.

Das erste Gegengewichtselement 310 enthält ein erstes Ende 312 und ein zweites Ende 314. Das zweite Gegengewichtselement 330 enthält ebenfalls ein erstes Ende 332, ein zweites Ende 334 und einen Antriebspunkt 336. Der zweite Pleuelstab 370 enthält ein erstes Ende 372 und ein zweites Ende 374. Das Ausgleichsgewichtselement 350 enthält eine zentrale Aufnahmeöffnung 352 sowie einen Exzenterzapfen 354.

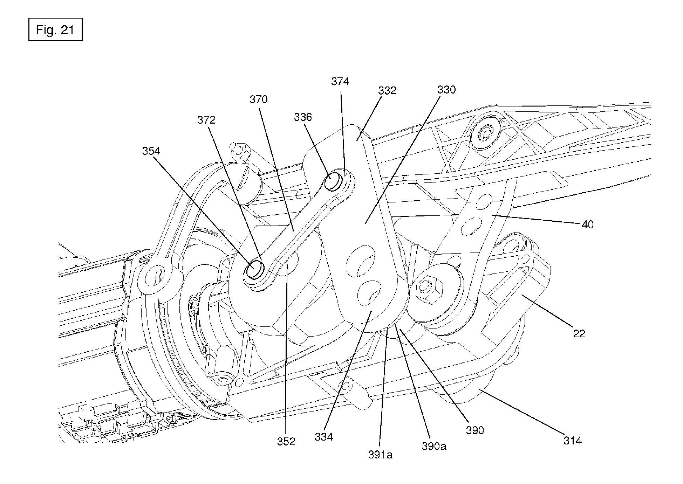

Wie in Fig. 21 dargestellt, ist das erste Ende 372 des zweiten Pleuelstabs 370 durch den Exzenterzapfen 354 an dem Ausgleichsgewichtselement 350 drehbar befestigt. Die zentrale Aufnahmeöffnung 352 des Ausgleichsgewichtselements 350 ist mit dem zweiten Ende der Antriebswelle 24 drehfest verbunden. Durch die Antriebswelle 24 wird ein im Motor 23 erzeugtes Drehmoment auf das Ausgleichsgewichtselement 350 übertragen.

Das erste Ende 372 des zweiten Pleuelstabs 370 ist mit dem Exzenterzapfen 354 des Ausgleichsgewichtselements 350 drehbar verbunden. Das zweite Ende 374 des Pleuelstabs 370 ist mit dem Antriebspunkt 336 des zweiten Gegengewichtselements 330 drehbar verbunden. Der Exzenterzapfen 354 des Ausgleichsgewichtselements 350 übertragt dieses Drehmoment des Antriebs 20 wiederum auf das erste Ende 372 des zweiten Pleuelstabs 370. Mit Hilfe des zweiten Pleuelstabs 370 wird das im Antrieb erzeugte Drehmoment wiederum auf das zweite Gegengewichtselement 330 übertragen. Über die erste drehfeste Verbindung 391 a an dem ersten Ende 390a des Verbindungsschafts 390 und die zweite drehfeste Verbindung 391 b an dem zweiten Ende 390b des Verbindungsschafts 390 wird das im Antrieb 20 erzeugte Drehmoment auf das erste Gegengewichtselement 310 übertragen.

Das erste Gegengewichtselement 310 und das zweite Gegengewichtselement 330 stehen im Wesentlichen parallel zueinander.

Aufgrund der speziellen Winkelstellungen des ersten Pleuelstabs 84, des zweiten Pleuelstabs 370, des Hebelarms 82, des ersten Gegengewichtselements 310 sowie des zweiten Gegengewichtselements 330 zueinander, bewegt sich die Gegengewichtsvorrichtung 300 mit den ersten und zweiten Gegengewichtselementen 310, 330 im Wesentlichen entgegen der Bewegung des ersten Gelenkstabs 40 und der Hubstange 60. Hierdurch wird den erzeugten Vibrationen und Schwingungen entgegengewirkt und folglich ein ruhigeres und effizienteres Arbeiten mit der Säbelsäge 1 erreicht.

Gemäß einer weiteren (nicht in den Figuren gezeigten) Ausführungsform der erfindungsgemässen Säbelsäge 1 kann außerdem vorgesehen sein, dass die Hubstange 60, der Antrieb 20 sowie der Verbindungseinrichtung 70 in umgekehrter Anordnung in dem Säbelsägengehäuse 10 positioniert sind. Das bedeutet, dass die Hubstange 60 in der Nähe der Gehäuseunterseite 18 und nicht in der Nähe der Gehäuseoberseite 16 angeordnet ist. Der Antrieb 20 und der Verbindungseinrichtung 70 funktionieren dabei in ähnlicher Weise wie in der ersten Ausführungsform der erfindungsgemässen Säbelsäge 1.

## Patentansprüche

1. Säbelsäge (1) zum Bearbeiten eines Werkstücks, insbesondere eines mineralischen oder metallischen Werkstoffs, enthaltend
- einen Antrieb (20); und
- eine Hubstange (60) mit einem ersten Hubstangenende (63), einem zweiten Hubstangenende (68) und einem Antriebspunkt (69);
**dadurch gekennzeichnet, dass** ein erster Gelenkstab (40) mit einem Drehgelenkpunkt (42) und einem Verbindungspunkt (44) sowie ein zweiter Gelenkstab (50) mit einem ersten Drehgelenkpunkt (52) und einem zweiten Drehgelenkpunkt (54) vorgesehen sind, wobei der Drehgelenkpunkt (42) des ersten Gelenkstabs (40) mit dem Antriebspunkt (69) der Hubstange (60) drehbar verbindbar ist und der Verbindungspunkt (44) des ersten Gelenkstabs (40) mittels einer Verbindungseinrichtung (70) mit dem Antrieb (20) drehfest verbindbar ist und wobei der Antrieb (20) zumindest teilweise in einem Antriebsgehäuse (22) positionierbar ist.

2. Säbelsäge (1) nach Anspruch 1,
**dadurch gekennzeichnet, dass** die Verbindungseinrichtung (70) einen ersten Pleuelstab (84) mit einem ersten Pleuelstabende (84a) und einem zweiten Pleuelstabende (84b) sowie einen Hebelarm (82) mit einem ersten Hebelarmende (82a) und einem zweiten Hebelarmende (82b) enthält, wobei das zweite Pleuelstabende (84b) mit dem ersten Hebelarmende (82a) drehbar verbindbar ist.

3. Säbelsäge (1) nach Anspruch 1,
**dadurch gekennzeichnet, dass** die Verbindungseinrichtung (70) in Form einer Kulissenführung (71) verwirklicht ist, über welche ein in dem Antrieb (20) erzeugtes Drehmoment wenigstens auf den Verbindungspunkt (44) des ersten Gelenkstabs (40) übertragbar ist.

4. Säbelsäge (1) nach Anspruch 1 oder 3,
**dadurch gekennzeichnet, dass** der Abstand (A1) entlang einer Längsachse (L) zwischen dem ersten Drehgelenkpunkt (42) des ersten Gelenkstabs (40) und dem zweiten Drehgelenkpunkt (52) des zweiten Gelenkstabs (50) variabel einstellbar ist.

5. Säbelsäge (1) nach Anspruch 4,
**dadurch gekennzeichnet, dass** der Abstand (A2) entlang der Längsachse (L) zwischen dem Antriebspunkt (69) der Hubstange (60) und dem ersten Drehgelenkpunkt (52) des zweiten Gelenkstabs (50) variabel einstellbar ist.

6. Säbelsäge (1) nach wenigstens einem der Ansprüche 3 bis 5,
**dadurch gekennzeichnet, dass** der Abstand (A3) entlang einer Hochachse (H) zwischen dem Drehgelenkpunkt (42) des ersten Gelenkstabs (40) und dem zweiten Drehgelenkpunkt (54) des zweiten Gelenkstabs (50) variabel einstellbar ist.

7. Säbelsäge (1) nach wenigstens einem der Ansprüche 3 bis 6,
**dadurch gekennzeichnet, dass** ein Kulissenhebel (72) der Kulissenführung (71) wenigstens einseitig federnd gelagert ist.
